# EUROPEAN PATENT SPECIFICATION

(11) **EP 0 457 436 B1**
(45) Date of publication and mention of the grant of the patent: **02.08.1995**
(21) Application number: 91303295.9
(22) Date of filing: 15.04.1991
(51) Int. Cl.: F16D 59/02, B66D 5/14

(54) **Disc brake for elevator**
Scheibenbremse für einen Aufzug
Frein à disque pour un ascenseur

(30) Priority: 13.04.1990 US 508627
(43) Date of publication of application: 21.11.1991
(60) Divisional application: 94203356.4
(73) Proprietor: OTIS ELEVATOR COMPANY, Farmington, CT 06032 (US)
(72) Inventor: Sheridan, William, Southington, Connecticut 06489 (US)
(74) Representative: Tomlinson, Kerry John

(56) References cited:
- DE-A- 2 646 736
- GB-A- 869 070
- US-A- 4 696 377

## Description

This invention relates to an improved brake assembly for use in holding an elevator car at a landing, which is also operable to stop the car under emergency conditions, as in a power failure or overspeed. More particularly, this invention relates to a caliper brake assembly for engagement with a disk secured to the elevator machine shaft or drive sheave to hold the latter against rotation.

Disk brakes which act upon a disk secured to an elevator machine shaft to hold the elevator car in place at landings are known in the prior art. Disk brakes in the prior art which have been adapted for elevator use have been full plate disk brakes wherein the brake shoes operable to engage the periphery of the disk to hold the car in place. Full plate disk brakes may be prone to dirt and moisture problems, and are not amenable to solenoid stroke variations due to their mode of operation. They are also noisy due to the difficulty in controlling motion in the relatively short stroke of the flat faced armature.

A disk brake is also known from DE-A-2646736 for use with handling equipment, such as travelling cranes, in which the disc is braked by a pair of opposed pads mounted on sprung levers and actuated by an electromagnet.

This invention relates to a disk brake assembly for use in an elevator system wherein the disk brakes are caliper-type brakes which are operative to engage a brake disk mounted on the machine shaft or drive sheave to hold the car in place at landings. More particularly, the disk brake assembly of this invention comprises:
a) a pair of brake shoes pivotally mounted on an associated pair of brake arms, said brake shoes having opposed braking surfaces;
b) a brake disk interposed between said brake shoes, said brake disk having opposite side surfaces facing respective ones of said braking surfaces;
c) stop means on each of said brake arms for engagement with a respective one of said brake shoes to limit pivotal movement of said brake shoes on said brake arms in one direction; and
d) spring means on each of said brake arms for biasing each of said brake shoes towards its respective stop means, said stop means and spring means being operable to retain said braking surfaces substantially parallel to said side surfaces of said brake disk.

The brake shoes are thus each spring biased on their mounts so that they will not tilt and drag on the brake disk when the brake is lifted.

The assembly may also comprise a latching solenoid and plunger associated with levers that engage with the brake arms and may thus obtain a mechanical advantage whereby smaller solenoids can be used to hold the brake in an "off" condition. The plunger may have a larger stroke which provides the advantage of being able to control the noise of the plunger or core by stepping the solenoid plunger to bias the magnetic flux thus controlling the velocity and force of the plunger. The brake assembly of this invention may be spring-biased "on", so that when power to the solenoid is interrupted, the brake will engage the brake disk by reason of spring action. The spring action may be supplied to the brake shoes by a single spring, or each brake shoe can be biased independently by for example its own individual spring. In the latter case, if one spring fails the other will cause engagement of one brake shoe with the disk which will be enough to hold the elevator at a landing safely. The brake assembly may be modular whereby a number of the assemblies can be ganged on a single disk for heavier duty elevators. The construction of the brake may be such that some of its components and its solenoid can be repaired or cleaned after being detached from the assembly while the brake shoes engage the brake disk.

It is therefore an object of this invention to provide an improved disk brake assembly for use in an elevator system for holding the car in place at landings and for emergency stopping of the car.

It is a further object of the invention to provide a brake assembly of the character described which includes individually spring-biased brake shoes to obviate dragging of the shoes on the disk when the brake is lifted.

These and other objects and advantages of the invention will become more readily apparent from the following detailed description of an exemplary preferred embodiment thereof when taken in conjunction with the accompanying drawings, in which:
FIGURE 1 is a perspective view of two of the brake modules and an associated disk which is keyed to the elevator machine shaft;
FIGURE 2 is an elevational view partially in section showing the disk mounted on the sheave;
FIGURE 3 is a top plan view of one of the brake modules;
FIGURE 4 is a front elevational view of the solenoid operated brake latch portion of the assembly;
FIGURE 5 is a view similar to FIGURE 3 but showing the use of separate actuating springs for each brake arm; and
FIGURE 6 is a fragmented sectional view of the lever-engaging pin on the brake arms.

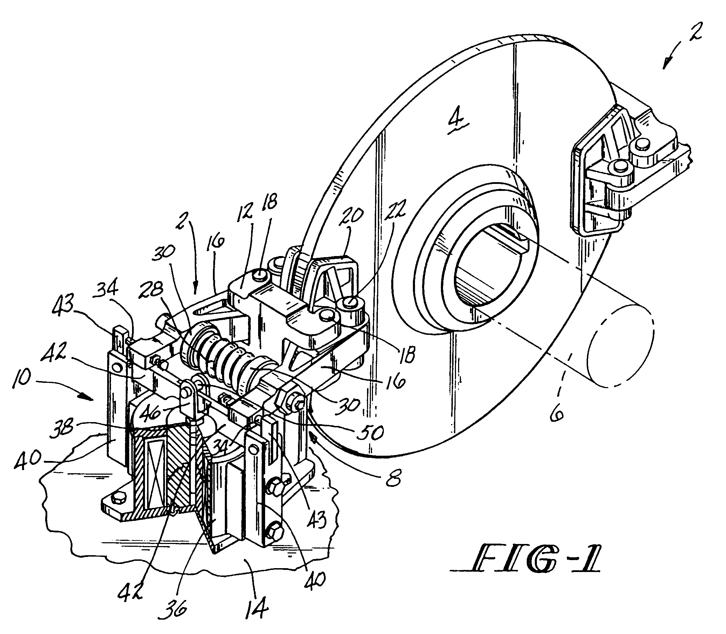

Referring now to FIGURE 1, two identical brake modules 2 are shown operably interacting with a brake disk 4 which is keyed to and rotates with the shaft 6 (shown in phantom) of the elevator machine. Each module 2 includes a brake assembly 8 and a brake latch assembly 10.

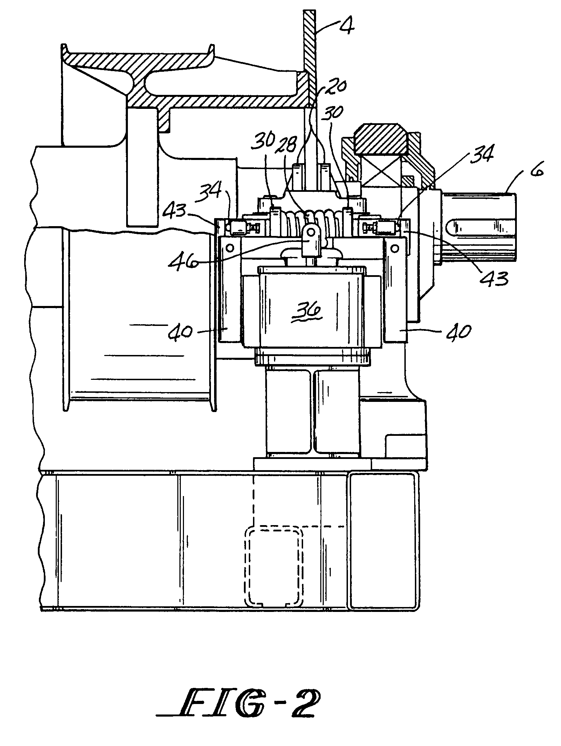

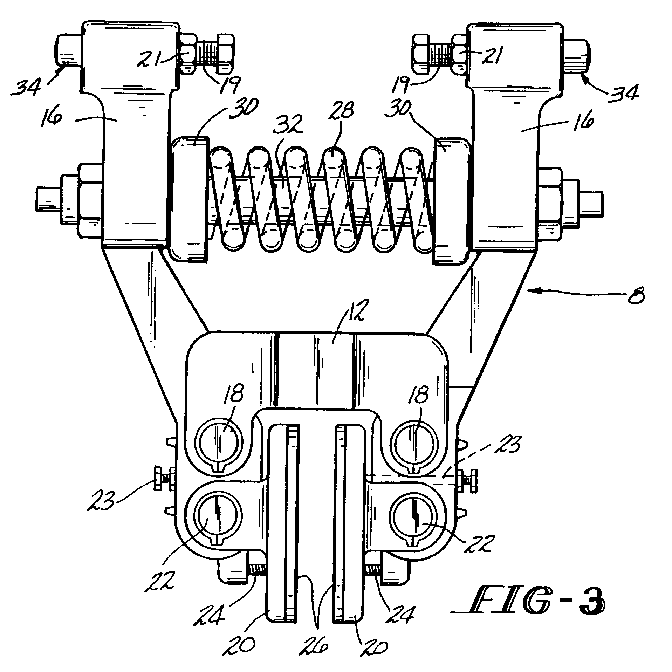

FIGURES 1, 2 and 3 show details of the brake assembly 8. The brake assembly 8 includes a bracket 12 which is fixed to the machine frame or stand 14 (shown in phantom lines in FIGURES 1 and 2) and to which two opposed brake arms 16 are mounted for pivotal movement about pins 18. A brake shoe 20 is pivotally mounted on pins 22 to the brake arms 16 so as to flank the disk 4. A coil spring 24 sandwiched between each brake shoe 20 about its respective brake arm 16 biases each brake shoe 20 about its respective pin 22 and toward the inner end of an adjustable screw 23 threaded into each arm 16, such that the brake pads 26 on the shoes 20 remain parallel to each other and to the disk 4. In this manner the pads 26 are prevented from dragging on the disk 4 when the brake is lifted. A brake actuating spring 28 is mounted in spring caps 30 carried on spring guides 32 which are secured to the brake arms 16. The spring 28 biases the arms 16 outwardly about the pins 18 thereby biasing the brake shoes 20 against the disk 4. This action will occur whenever power is removed from the solenoid 36. In the event of a power failure or an emergency, the brake will automatically sit on the disk. The spring 28 thus supplies the force needed to set the brake. Cam pins 34 are mounted on the ends of the arms 16 distal of the brake shoes 20.

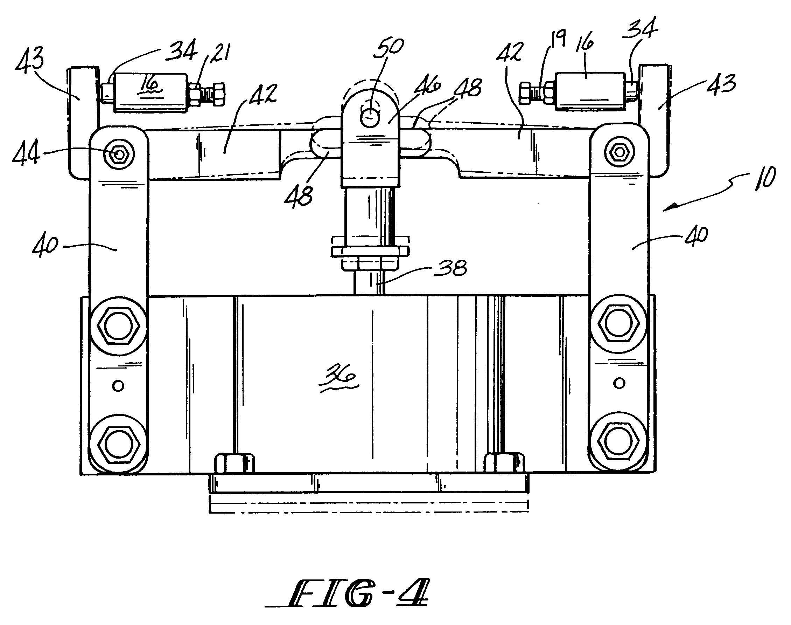

FIGURES 1 and 4 show details of the brake latching assembly 10. The latch 10 includes a solenoid 36 fixed to the machine stand 14 and a solenoid actuated plunger 38 which moves up and down in the solenoid 36. Brackets 40 are mounted on opposite sides of the solenoid 36 and latch levers 42 with upturned fingers 43 are pivotally mounted on the brackets 40 via pins 44. A clevis 46 is disposed on the plunger 38 and receives overlapping ends 48 of the levers 42. A pin 50 spans the clevis 46 and overlies the ends 48 of the levers 42 thereby interconnecting the solenoid plunger 38 and the levers 42. The upturned fingers 43 on the levers 42 engage the cam pins 34 on the brake assembly 8.

It will be appreciated that when the latch levers 42 are disconnected from the mount brackets 40, and released from the clevis 46 by removing pin 50, the core pin 38 can simply be pulled up out of the solenoid core for cleaning or replacement.

When the solenoid 36 is supplied with electricity, the plunger 38 will be recessed in the solenoid 36, and the clevis 46, levers 42 and cam pins 34 will be in the positions shown in solid lines in FIGURE 4. The cam pins 34 will thus be latched causing compression of the brake actuating spring 28 and lifting the brake shoes 20 off the brake disk 4. When the elevator car is properly levelled at a landing, the elevator controller switches off electrical power to the solenoid 36 allowing the plunger 38 and clevis 46 to rise to the position shown in phantom lines in FIGURE 4. This movement causes the levers 42 to pivot about the pins 44 to the respective positions shown in phantom in FIGURE 4 whereby the actuating spring 28 is able to pivot the brake arms 16 about the pins 18 causing the brake shoe pads 26 to engage the disk 4. The enabling of the actuating spring 28 is the result of movement of the lever fingers 43 away from the cam pins 34, as shown in phantom lines in FIGURE 4. The brake will thus be set on the disk 4, and the car held at the landing. When it is desired to move the car away from the landing, the controller switches power back on to the solenoid 36. This causes the plunger 38 to be drawn back into the solenoid 36 to return the clevis 46, levers 42 and cam pins 34 back to the respective positions shown in solid lines in FIGURE 4. Movement of the cam pins 34 causes the brake pads 26 to lift off of the disk 4, and compresses the actuating spring 28.

Referring to FIGURE 6, details of the lever contact pin assembly 34 are shown. At the outer end of the brake arm 16, a threaded bore 17 is formed to receive an adjustment bolt 19 carrying a lock nut 21. The bore 17 opens into a smooth bore 23 in which a pin 25 is slideably disposed. The pin 25 has rounded end walls 37 and 39 for providing point contact between the brake arms and levers and may carry a pair of friction rings 31 to snugly hold the pin 25 in place within the bore 23.

The adjustment bolt 19 allows the pin 25 to move toward and away from finger 43 to thereby allow the positioning of the levers 42 to be modified.

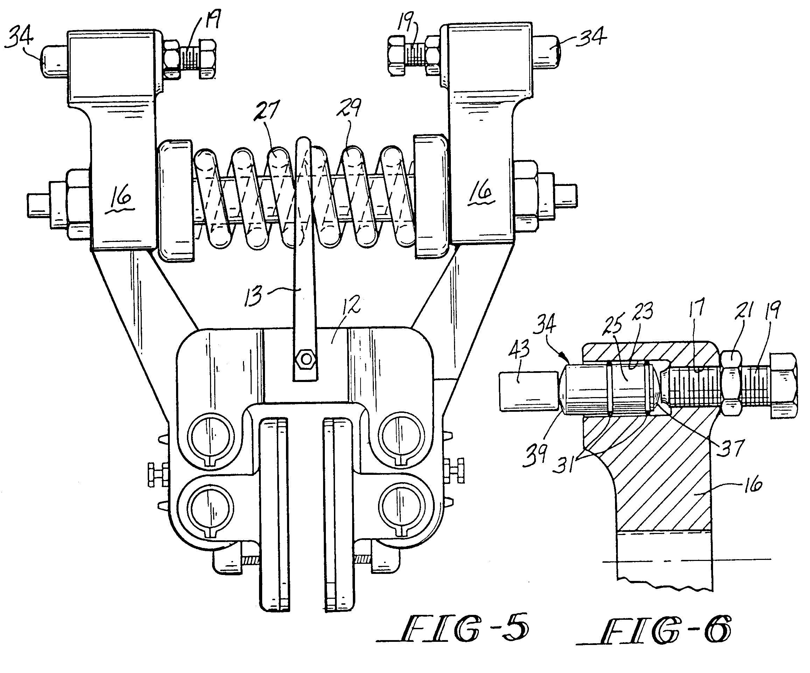

In FIGURE 5 there is shown an alternative embodiment of the invention wherein two actuating springs 27 and 29 are used, one for independently biasing each of the levers 16. Each of the springs 27 and 29 seats on a central plate 13 which is fastened to the bracket 12. By using two separate springs, if one fails, the other one will still be operable to move one of the brake shoes against the disk 4 to provide some braking of the car at the landing. A single spring separated into two independent portions could also be used.

It will be appreciated that the brake assembly of this invention provides several advantages over prior art caliper disk brakes. Biasing the brake shoes on the brake arms ensures that the brake shoes will not drag on the disk when the brakes are applied or lifted, thereby quieting the brake. The use of levers in the latch assembly provides the mechanical advantage sufficient to allow the use of a small latch solenoid having a longer stroke. The longer stroke solenoid allows the use of the stepped core whereby noise may be reduced. The use of two actuating springs on the brake assembly assures that spring failure will not completely prevent the brake from operating. The modular construction of the assembly enables one unit to be used in lighter duty elevators, and multiple units to be used in heavier duty elevators. It also allows repair and cleaning of the latch assembly components while the brake is set.

Since many changes and variations of the disclosed embodiments of the invention may be made without departing from the inventive concept, it is not intended to limit the invention otherwise than as required by the appended claims.

## Claims

1. A caliper brake assembly (8) comprising:
a) a pair of brake shoes (20) pivotally mounted on an associated pair of brake arms (16), said brake shoes (20) having opposed braking surfaces (26); and
b) a brake disk (4) interposed between said brake shoes (20), said brake disk (4) having opposite side surfaces facing respective ones of said braking surfaces (26); characterised in that said assembly (8) further comprises:
c) stop means (23) on each of said brake arms (16) for engagement with a respective one of said brake shoes (20) to limit pivotal movement of said brake shoes (20) on said brake arms (16) in one direction; and
d) spring means (24) on each of said brake arms (16) for biasing each of said brake shoes (20) towards its respective stop means (23), said stop means (23) and spring means (24) being operable to retain said braking surfaces (26) substantially parallel to said side surfaces of said brake disk (1).

2. The brake assembly (8) of claim 1, wherein said stop means (23) is adjustable whereby the pivotal position of said brake shoes (20) on said brake arms (16) can be varied in the brake off position.

3. The brake assembly (8) of claim 1 or 2, wherein second spring means (28;27,29) are provided which act on said brake arms (16) to bias said brake shoes (20) toward each other and latching means (10) are provided comprising:
i) a pair of pivotally mounted levers (42) for engagement with said brake arms (16) to hold the latter against the bias of said second spring means (28;27,29); and
ii) solenoid latch actuating means (36,38) including a solenoid plunger (38) operably engaging said levers (42) to selectively hold the latter against said brake arms (16), said plunger (38) being reciprocally movable between latch-on and latch-off positions to selectively latch and release said brake arms (16).

4. The brake assembly (8) of claim 3, wherein said second spring means (28;27,29) independently biases each said brake shoe (20) toward the other.

5. The brake assembly (8) of claim 3 or 4, wherein said solenoid plunger (38) operates in a direction perpendicular to the direction of bias of said second spring means (28;27,29).

6. The brake assembly (8) of claim 3, 4, or 5, wherein said solenoid plunger (38) is connected to adjacent ends (48) of said levers (42) with a common connecting pin (50).

7. The brake assembly (8) of claim 6, wherein said adjacent ends (48) of said levers (42) are overlapped.

8. The brake assembly (8) of any of claims 3 to 7, wherein said solenoid plunger (38) can be removed from an associated solenoid coil (36) for cleaning upon disengagement from said levers (42).

9. The brake assembly (8) of any of claims 3 to 8, further comprising contact means for providing operating contact between said brake arms (16) and said levers (42), said contact means comprising contact pins (34) slideably mounted on ends of said brake arms (16) distal of said brake shoes (20), and arranged for engagement with said levers (42), and means (19,21) for adjustably moving said contact pins (34) toward and away from said levers (42) to modify the positioning of said levers (42).

10. The brake assembly (8) of claim 9, wherein said contact pins (34) are provided with rounded ends engaging said levers (42) for providing point contact between said brake arms (16) and levers (42).

## Patentansprüche

1. Zangenbremsvorrichtung (8), aufweisend:
a) ein Paar Bremsschuhe (20), die schwenkbar an einem zugehörigen Paar von Bremsarmen (16) angebracht sind, wobei die Bremsschuhe einander gegenüberliegende Bremsflächen (26) haben; und
b) eine Bremsscheibe (4), die zwischen den Bremsschuhen (20) angeordnet ist und die entgegengesetzte Seitenflächen hat, die jeweils einer der Bremsflächen (26) zugewandt sind;
**dadurch gekennzeichnet,**
daß die Vorrichtung (8) außerdem aufweist:
c) eine Anschlageinrichtung (23) an jedem der Bremsarme (16) zum Zusammenwirken mit dem jeweiligen Bremsschuh (20), um die Schwenkbewegung der Bremsschuhe (20) an den Bremsarmen (16) in eine Richtung zu begrenzen; und
d) eine Federeinrichtung (24) an jedem der Bremsarme (16) zum Vorspannen jedes Bremsschuhs (20) in Richtung auf seine jeweilige Anschlageinrichung (23), wobei die Anschlageinrichtung (23) und die Federeinrichtung (24) die Bremsflächen (26) im wesentlichen parallel zu den Seitenflächen der Bremsscheibe (1) halten können.

2. Bremsvorrichtung (8) nach Anspruch 1, bei der die Anschlageinrichtung (23) verstellbar ist, wodurch die Schwenkposition der Bremsschuhe (20) an den Bremsarmen (16) in der Position "Bremse aus" variiert werden kann.

3. Bremsvorrichtung (8) nach Anspruch 1 oder 2, bei der eine zweite Federeinrichtung (28;27,29) vorgesehen ist, die auf die Bremsarme (16) wirkt, um die Bremsschuhe (20) in Richtung aufeinander zu vorzuspannen, und bei der eine Halteeinrichtung (10) vorgesehen ist, aufweisend:
i) ein Paar von schwenkbar angebrachten Hebeln (42) zum Zusammenwirken mit den Bremsarmen (16), um letztere entgegen die Vorspannung der zweiten Federeinrichtung (28;27,29) zu halten; und
ii) eine Solenoid-Betätigungseinrichtung (36,38)für die Halteeinrichtung, die einen Solenoidtauchkern (38) aufweist, der arbeitsfähig mit den Hebeln (42) zusammenwirkt, um letztere wahlweise gegen die Bremsarme (16) zu halten, und der zwischen einer "Halten ein"- und einer "Halten aus"-Position hin und her bewegbar ist, um die Bremsarme (16) wahlweise zu halten und freizugeben.

4. Bremsvorrichtung (8) nach Anspruch 3, bei der die zweite Federeinrichtung (28;27,29) unabhängig jeden Bremsschuh (20) in Richtung auf den anderen vorspannt.

5. Bremsvorrichtung (8) nach Anspruch 3 oder 4, bei der der Solenoidtauchkern (38) in eine Richtung rechtwinklig zu der Vorspannrichtung der zweiten Federeinrichung (28;27,29) arbeitet.

6. Bremsvorrichtung (8) nach Anspruch 3, 4 oder 5, bei der der Solenoidtauchkern (38) mit benachbarten Enden (48) der Hebel (42) mit einem gemeinsamen Verbindungsstift (50) verbunden ist.

7. Bremsvorrichtung (8) nach Anspruch 6, bei der sich die benachbarten Enden (48) der Hebel (42) überlappen.

8. Bremsvorrichtung (8) nach einem der Ansprüche 3 bis 7, bei der der Solenoidtauchkern (38) aus einer zugehörigen Solenoidspule (36) nach Lösen von den Hebeln (42) zum Reinigen herausgenommen werden kann.

9. Bremsvorrichtung (8) nach einem der Ansprüche 3 bis 8, außerdem aufweisend eine Kontakteinrichtung zum Schaffen von betriebsmäßigem Kontakt zwischen den Bremsarmen (16) und den Hebeln (42), wobei die Kontakteinrichtung Kontaktstifte (34) aufweist, die an den Enden der Bremsarme (16), die von den Bremsschuhen (20) entfernt sind, verschiebbar angebracht sind und zum Eingriff mit den Hebeln (42) angeordnet sind, und außerdem aufweisend eine Einrichtung (19,21) zum Verstell-Bewegen der Kontaktstifte (34) in Richtung auf die Hebel (42) und von diesen weg, um die Positionierung der Hebel (42) zu verändern.

10. Bremsvorrichtung (8) nach Anspruch 9, bei der die Kontaktstifte (34) mit abgerundeten Enden versehen sind, die mit den Hebeln (42) zusammenwirken, um einen Punktkontakt zwischen den Bremsarmen (16) und den Hebeln (42) zu schaffen.

## Revendications

1. Ensemble de frein à étrier (8) comprenant :
a) une paire de segments de frein (20) montés pivotants sur une paire de bras de frein (16) associés, lesdits segments de frein (20) ayant des surfaces de freinage opposées (26) ; et
b) un disque de frein (4) interposé entre lesdits segments de frein (20), ledit disque de frein (4) ayant des surfaces latérales opposées faisant face aux surfaces respectives desdites surfaces de freinage (26) ; caractérisé en ce que ledit ensemble (8) comprend en plus :
c) des moyens formant arrêt (23) sur chacun desdits bras de frein (16) pour coopérer avec un segment de frein respectif desdits segments de frein (20) et limiter le mouvement de pivotement desdits segments de frein (20) sur lesdits bras de frein (16) dans une direction ; et
d) des moyens formant ressort (24) sur chacun desdits bras de frein (16) pour solliciter chacun desdits segments de frein (20) vers son moyen respectif formant arrêt (23), lesdits moyens formant arrêt (23) et lesdits moyens formant ressort (24) pouvant maintenir lesdites surfaces de freinage (26) sensiblement parallèles auxdites surfaces latérales dudit disque de frein (1).

2. Ensemble de frein (8) selon la revendication 1, dans lequel lesdits moyens formant arrêt (23) sont ajustables, de sorte que la position de pivotement desdits segments de frein (20) sur lesdits bras de frein (16) peut être changée dans la position desserrée du frein.

3. Ensemble de frein (8) selon la revendication 1 ou 2, dans lequel des seconds moyens formant ressort (28 ; 27, 29) sont prévus, lesquels agissent sur lesdits bras de frein (16) pour solliciter lesdits segments de frein (20) l'un vers l'autre et des moyens de verrouillage (10) sont prévus comprenant :
i) une paire de leviers (42) montés de manière pivotante pour être en prise avec lesdits bras de frein (16) pour maintenir ceux-ci contre la force desdits seconds moyens formant ressort (28 ; 27, 29) ; et
ii) un moyen d'actionnement de verrouillage par électro-aimant (36, 38) comprenant un plongeur d'électro-aimant (38), pouvant coopérer en fonctionnement avec lesdits leviers (42) pour maintenir sélectivement ceux-ci contre lesdits bras de frein (16), ledit plongeur (38) étant mobile alternativement entre les positions verrouillée et déverrouillée de manière à verrouiller et libérer sélectivement lesdits bras de frein (16).

4. Ensemble de frein (8) selon la revendication 3, dans lequel lesdits seconds moyens formant ressort (28 ; 27, 29) sollicitent de manière indépendante chacun desdits segments de frein (20) l'un vers l'autre.

5. Ensemble de frein (8) selon les revendications 3 ou 4, dans lequel ledit plongeur d'électro-aimant (38) fonctionne dans une direction perpendiculaire à la direction de force desdits seconds moyens formant ressort (28 ; 27, 29).

6. Ensemble de frein (8) selon les revendications 3, 4, ou 5, dans lequel ledit plongeur d'électro-aimant (38) est relié aux extrémités adjacentes (48) desdits leviers (42) au moyen d'une goupille commune de liaison (50).

7. Ensemble de frein (8) selon la revendication 6, dans lequel lesdites extrémités adjacentes (48) desdits leviers (42) se chevauchent.

8. Ensemble de frein (8) selon l'une quelconque des revendications 3 à 7, dans lequel ledit plongeur d'électro-aimant (38) peut être retiré d'une bobine d'électro-aimant associée (36) pour nettoyage, lors du dégagement desdits leviers (42).

9. Ensemble de frein (8) selon l'une quelconque des revendications 3 à 8, comprenant en plus des moyens formant contact pour fournir un contact de fonctionnement entre lesdits bras de frein (16) et lesdits leviers (42), lesdits moyens formant contact comprenant des doigts de contact (34) montés coulissants sur les extrémités desdits bras de frein (16) éloignées desdits segments de frein (20), et disposés pour coopérer avec lesdits leviers (42), et des moyens (19, 21) pour rapprocher et éloigner desdits leviers (42), de manière ajustable, lesdits doigts de contact (34) pour modifier le positionnement desdits leviers (42).

10. Ensemble de frein (8) selon la revendication 9, dans lequel lesdits doigts de contact (34) sont pourvus d'extrémités arrondies coopérant avec lesdits leviers (42) pour fournir un contact ponctuel entre lesdits bras de frein (16) et les leviers (42).
